# EUROPÄISCHE PATENTSCHRIFT

(11) **EP 2 163 796 B1**
(45) Veröffentlichungstag und Bekanntmachung des Hinweises auf die Patenterteilung: **22.05.2013**
(21) Anmeldenummer: 09011341.6
(22) Anmeldetag: 03.09.2009
(51) Int. Cl.: F16K 1/226, F16J 15/06

(54) **Klappenarmatur, insbesondere für den Einsatz in korrosiven wässrigen Medien**
Flap fitting, in particular for use in corrosive aqueous media
Armature à clapets, notamment pour l'utilisation dans des milieux corrosifs aqueux

(30) Priorität: 10.09.2008 DE 102008046663
(43) Veröffentlichungstag der Anmeldung: 17.03.2010
(73) Patentinhaber: Adams Armaturen GmbH, 44653 Herne (DE)
(72) Erfinder: Trentmann, Andreas, 44625 Herne (DE)
(74) Vertreter: Behrendt, Arne

(56) Entgegenhaltungen:
- DE-A1- 2 828 238
- DE-A1- 3 516 471
- DE-A1- 3 800 705
- JP-A- 57 184 767
- US-A- 4 253 641
- US-A- 4 540 457

## Beschreibung

Die Erfindung betrifft eine Klappenarmatur, insbesondere für den Einsatz in korrosiven wässrigen Medien, mit einer in einem Gehäuse verschwenkbar gelagerten Klappenscheibe, die an ihrem Umfang mit einer umlaufenden Ausnehmung versehen ist, die eine Dichtring aufnimmt und seitlich von einem mit der Klappenscheibe verschraubten Klemmring begrenzt wird, der den Dichtring in der Ausnehmung festklemmt und aus einem gegen korrosive wässrige Medien resistenten Material besteht.

Bei nach dem Stande der Technik bekannten Klappenarmaturen der genannten Art erfordert insbesondere der aus rostfreiem Stahl bestehende, den Dichtring festklemmende Klemmring einen hohen Bearbeitungsaufwand. Um ringsum eine gleichmäßige Abdichtwirkung zu erzielen, müssen die Anlage- und Dichtflächen dieses Klemmringes nämlich genau maßhaltig bearbeitet sein. Dabei darf sich der verhältnismäßig dünne und deshalb leicht verformbare Klemmring unter dem Einfluss der bei der Bearbeitung der Oberfläche und beim Herstellen der Schraubenlöcher eingetragenen Wärme nicht verformen. Außerdem müssen so gut wie möglich die durch die Erwärmung auftretenden schädlichen Gefügeveränderungen des Stahls vermieden werden. Deshalb muss das Werkstück bei der Bearbeitung allseitig intensiv gekühlt werden.

Ander bekannte Armaturen sind in DE 3800 705 A1 und US 4540457 A1 offengelegt.

Wegen der bei der Bearbeitung auftretenden Wärmedehnungen und durch Gefügeveränderungen verursachte innere Spannungen ist es auch schwierig, den Klemmring in Segmente zu unterteilen, ohne dass die Maßhaltigkeit verloren geht. Eine solche Unterteilung in Segmente ist indessen wichtig, wenn der Dichtring der Kappenscheibe ohne komplette Demontage der gesamten Armatur gewechselt werden soll, wozu der Klemmring demontiert und anschließend wieder montiert werden muss. Letzteres ist aus Gewichts- und Platzgründen nur möglich, wenn der Klemmring Segment für Segment demontiert und anschließend wieder montiert werden kann. Ohne diese Segmentierung wäre der Klemmring innerhalb des Gehäuses der Armatur nicht handhabbar.

Die geschilderten Bearbeitungsprobleme steigern sich noch, wenn für den Klemmring ein hoch- oder höchstlegierter Stahl verwendet werden muss, der gegen aggressive wässrige Medien, wie z. B. Seewasser, korrosionsbeständig ist. Solche hoch- und höchstlegierten Stähle lassen sich nämlich noch schlechter bearbeiten als normale rostfreie Stähle. Infolgedessen ist der Klemmring insbesondere bei der Verwendung von Stahllegierungen, die resistent gegen aggressive wässrige Lösungen sind, extrem teuer.

Nach dem Stand der Technik (DE 35 16 471 A1) ist auch eine Klappenarmatur bekannt, bei der der die Klappenscheibe umgebende Dichtring nicht mittels eines Klemmringes, sondern mittels eingegossenem Epoxidharz in der Ausnehmung festgelegt wird. Hier steht allerdings zu befürchten, dass diese Befestigung des Dichtringes nicht ausreichend stabil ist. Außerdem lässt sich eine solche eingegossene Dichtung nicht an Ort und Stelle auswechseln.

Es ist deshalb Aufgabe der Erfindung, die Klappenarmatur der eingangs genannten Art mit einem Klemmring zu versehen, der wie an sich bekannt, resistent gegen korrosive wässrige Medien ist, aber dennoch schnell und einfach zu bearbeiten ist und allen Anforderungen im Hinblick auf das Festklemmen des Dichtringes genügt. Außerdem soll der neue Klemmring zum Zwecke des Auswechselns des Dichtringes leichter einbaubar und ausbaubar sein.

Zur Lösung dieser Aufgabe schlägt die Erfindung ausgehend von der Klappenarmatur der eingangs genannten Art vor, dass der Klemmring aus einem Glasfaser-Kunststoff-(GFK) - Schichtpresswerkstoff besteht, der aus Glasfilamentgewebe und Epoxidharz herstellt ist.

Es hat sich überraschenderweise herausgestellt, dass ein solcher gegen korrosive wässrige Medien resistenter Faserverbundwerkstoff sich schnell und präzise bearbeiten lässt und dennoch Festigkeitseigenschaften hat, die der Funktion als Klemmring genügen. Da die beim Schneiden, Bohren und der Oberflächenbearbeitung dieses Werkstoffes unvermeidbar auftretenden Erwärmungen nicht zu Gefügeveränderungen und inneren Spannungen führen, behält das Material trotz der Bearbeitung seine Form und seine physikalischen Eigenschaften. Ein weiterer Vorteil besteht darin, dass dieser Faserverbundwerkstoff erheblich billiger als ein entsprechend korrosionsbeständiger Stahl ist und außerdem erheblich weniger wiegt. Das um 75 % reduzierte Gewicht macht es erheblich leichter, den Klemmring zu montieren und demontieren. Die Montage und Demontage wird noch einfacher. Wenn man diesen aus Faserverbundwerkstoff bestehenden Klemmring in Segmente unterteilt, die ohne Hilfsmittel handhabbar sind und dementsprechend schnell montiert und demontiert werden können. Auch das Zerteilen des aus Faserverbundwerkstoff bestehenden Klemmringes in Segmente ist möglich, ohne dass es zu Maßungenauigkeiten kommt.

Eine vorteilhafte Ausführungsform der Erfindung sieht vor, dass der Klemmring aus einem Glasfaser-Kunststoff-(GFK)-Schichtpresswerkstoff besteht, der aus Glasfilamentgewebe und Epoxidharz besteht. Ein solcher Schichtpresswerkstoff zeichnet sich durch eine sehr hohe mechanische Festigkeit aus, die einerseits dadurch erreicht wird, dass die Glasfilamente innerhalb des Glasfilamentgewebes einen Zusammenhalt haben und andererseits dadurch, dass durch den Pressvorgang etwaige Luft- oder Gasblasen aus dem Werkstoff ausgetrieben worden sind.

Vorzugsweise hat der Schichtpresswerkstoff eine Zugfestigkeit von mindestens 300 MPa, senkrecht zur Schichtrichtung eine Druckfestigkeit von mindestens 350 MPa und eine Biegezugspannung beim Bruch senkrecht zur Schichtrichtung von mindestens 340 MPa. Die Festigkeitseigenschaften dieses Werkstoffes reichen aus, die beim Festziehen der Klemmschrauben auftretenden Kräfte aufzunehmen und gleichmäßig auf den in der Ausnehmung der Klappenscheibe befindlichen Dichtring zu verteilen.

Um zu vermeiden, dass der Klemmring beim Einsatz in Seewasser Wasser aufnimmt und aufquillt, hat der Schichtpresswerkstoff eine Wasseraufnahmefähigkeit nach ISO 62 von maximal 23 mg.

Optimale Festigkeits- und Dichtigkeitswerte ergeben sich, wenn der Schichtpresswerkstoff zu 38 % aus Epoxidharz und zu 62 % aus Glasfilamentgewebe besteht.

Zur vereinfachten Montage und Demontage des Klemmringes ohne Demontage der gesamten Armatur ist vorgesehen, dass der Klemmring in mehrere Segmente unterteilt ist.

Ein Ausführungsbeispiel der Erfindung wird im Folgenden anhand der Zeichnungen näher erläutert. Es zeigen:
- Figur 1:: eine perspektivische Ansicht der Klappenarmatur insgesamt;
- Figur 2:: einen vertikalen Schnitt durch das Gehäuse und die Klappenscheibe bei geschlossener Klappenarmatur;
- Figur 3:: eine Ansicht des segmentierten Klemmringes.

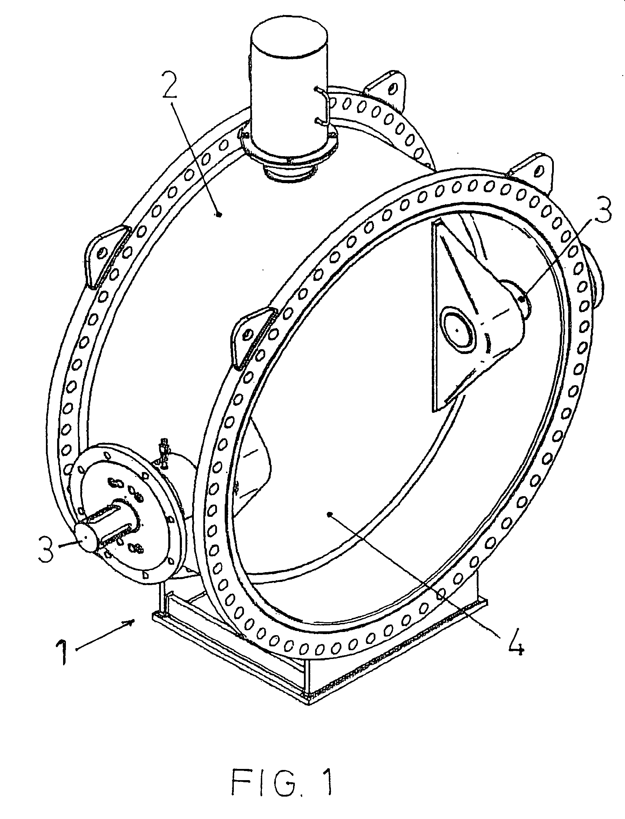

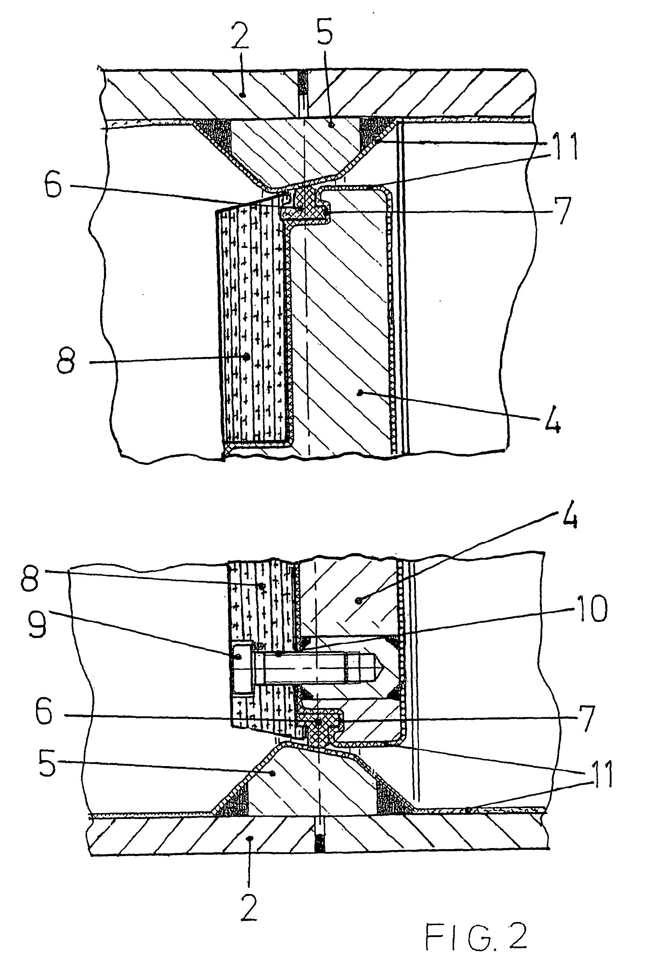

In Figur 1 ist die Klappenarmatur insgesamt mit dem Bezugszeichen 1 bezeichnet. Sie besteht aus einem rohrförmigen Gehäuse 2, in welchem um eine Schwenkachse 3 verschwenkbar eine kreisrunde Klappenscheibe 4 gelagert ist. Die Klappenscheibe 4 ist an ihrem äußeren Umfang mit einer Dichtungsanordnung versehen, deren Details aus Figur 2 ersichtlich sind.

Wie Figur 2 zeigt, ist das Gehäuse 2 an seinem inneren Umfang mit einem umlaufenden Sitzring 5 verschweißt. An diesem Sitzring 5 liegt die in der Schließstellung befindliche Klappenscheibe 4 mit einem Dichtring 6 an, der am äußeren Umfang der Klappenscheibe 4 befestigt ist und in radialer Richtung geringfügig über die Klappenscheibe 4 vorsteht. Der Dichtring 6 liegt in einer umlaufenden Ausnehmung 7 am Umfang der Klappenscheibe 4. Diese Ausnehmung 7 wird seitlich, das heißt also in axialer Richtung, von einem mit der Klappenscheibe 4 verschraubten Klemmring 8 begrenzt, welcher den Dichtring 6 in der Ausnehmung 7 festklemmt. Für die Erzeugung der Klemmkraft werden Klemmschrauben 9 verwendet, die auf den Umfang der Klappenscheibe 4 verteilt angeordnet sind, durch entsprechende Bohrungen 10 in Klemmring 8 hindurchgreifen und in Gewindesacklöcher in der Klappenscheibe 4 eingeschraubt sind.

Wie sich aus Figur 2 weiterhin ergibt, sind die inneren Oberflächen des Gehäuses 2 und die äußeren Oberflächen der Klappenscheibe 4 - mit Ausnahme des Klemmringes 8, der Klemmschrauben 9 und des Dichtringes 6 - mit einer Schutzschicht 11 z. B. aus Hartgummi überzogen, so dass diese Oberflächen nicht mit den korrosiven flüssigen Medien in Berührung kommen.

Der Klemmring 8 besteht erfindungsgemäß aus einem gegen korrosive wässrige Medien, z. B. gegen Seewasser, resistenten Faserverbundwerkstoff, der beim Ausführungsbeispiel als Schichtpresswerkstoff aus Epoxidharz (38 %) und Glasfilamentgewebe (62 %) besteht und eine Zugfestigkeit von mindestens 300 MPa, eine Druckfestigkeit (senkrecht zur Schichtrichtung) von mindestens 350 MPa und eine Bruchbiegespannung (senkrecht zur Schichtrichtung) von mindestens 340 MPa hat. Außerdem hat dieser Schichtpresswerkstoff eine maximale Wasseraufnahmefähigkeit (nach ISO 62) von maximal 23 mg.

Die Schichtrichtung des Glasfilamentgewebes ist in Figur 2 durch die Schraffur angedeutet. Sie verläuft parallel zur Erstreckungsebene des Klemmrings 8.

Die Klemmschrauben 9, die ebenfalls mit den korrosiven aggressiven Medien in Berührung kommen, bestehen aus einem entsprechend hoch- oder höchstlegiertem Stahl, der entsprechend korrosionsfest ist.

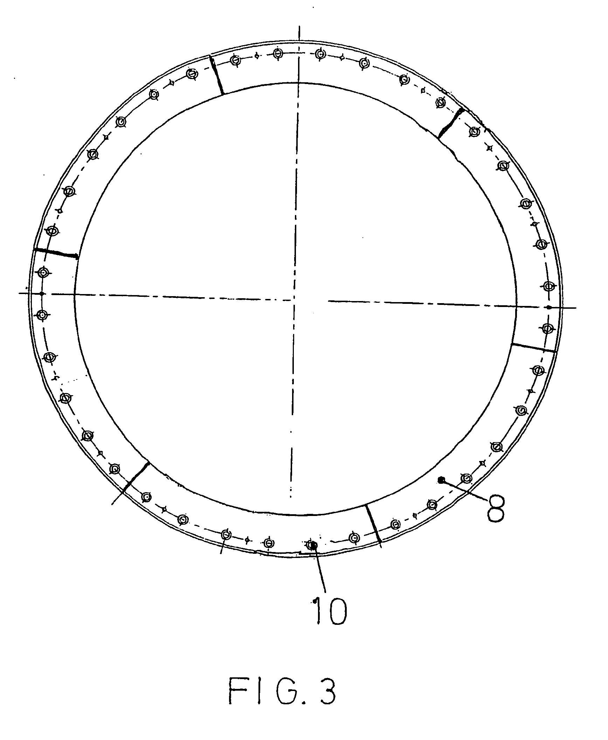

Der Klemmring 8 kann insgesamt einstückig ausgebildet sein. Er kann aber auch, wie aus Figur 3 erkennbar ist, aus insgesamt sechs Segmenten bestehen. Die Unterteilung in Segmente, die bei der Herstellung des Klemmringes 8 aus Faserverbundwerkstoff problemlos möglich ist, und das geringe spezifische Gewicht von Faserverbundwerkstoff erleichtern den Ein- und Ausbau des Klemmringes 8 z. B. beim Auswechseln des Dichtringes 6 außerordentlich. Hierzu braucht die Klappenarmatur - ausreichende Nennweite natürlich vorausgesetzt - nicht einmal demontiert zu werden.

## Patentansprüche

1. Klappenarmatur, insbesondere für den Einsatz in korrosiven wässrigen Medien, mit einer in einem Gehäuse (2) verschwenkbar gelagerten Klappenscheibe (4), die an ihrem Umfang mit einer umlaufenden Ausnehmung (7) versehen ist, die einen Dichtring (6) aufnimmt und seitlich von einem mit der Klappenscheibe (4) verschraubten Klemmring (8) begrenzt wird, der den Dichtring (6) in der Ausnehmung (7) festklemmt **und aus einem gegen korrosive wässrige Medien resistenten Material besteht, dadurch gekennzeichnet, dass** der Klemmring (8) **aus einem Glasfaser-Kunststoff-(GFK)-Schichtpresswerkstoff besteht, der aus Glasfilamentgewebe und Epoxidharz hergestellt ist.**

2. Klappenarmatur nach Ansprüchen 1, **dadurch gekennzeichnet, dass** der Schichtpresswerkstoff eine Zugfestigkeit von mindestens 300 MPa, senkrecht zur Schichtrichtung eine Druckfestigkeit von mindestens 350 MPa und eine Biegespannung beim Bruch senkrecht zur Schichtrichtung von mindestens 340 MPa hat.

3. Klappenarmatur nach den Ansprüchen 1 und 2, **dadurch gekennzeichnet, dass** der Schichtpresswerkstoff eine Wasseraufnahmefähigkeit nach ISO 62 von maximal 23 mg hat.

4. Klappenarmatur nach den Ansprüchen 1 bis 3, **dadurch gekennzeichnet, dass** der Schichtpresswerkstoff zu 38 % aus Epoxidharz und zu 62 % aus Glasfilamentgewebe besteht.

5. Klappenarmatur nach einem oder mehreren der Ansprüche 1 bis 4, **dadurch gekennzeichnet, dass** der Klemmring (8) in mehrere Segmente unterteilt ist.

## Claims

1. A flap fitting, in particular for use in corrosive aqueous media, comprising a flap disc (4) which is mounted pivotably in a housing (2) and which is provided at its periphery with a peripherally extending recess (7) which accommodates a sealing ring (6) and is laterally delimited by a clamping ring (8) which is screwed to the flap disc (4) and which clamps the sealing ring (6) fast in the recess (7) and comprises a material resistant to corrosive aqueous media, **characterised in that** the clamping ring (8) comprises a glass fibre plastic (GRP) laminated pressed material made from glass filament cloth and epoxy resin.

2. A flap fitting according to claim 1 **characterised in that** the laminated pressed material has a tensile strength of at least 300 MPa, perpendicularly to the laminate direction a compression strength of at least 350 MPa and a bending stress upon fracture perpendicularly to the laminate direction of at least 340 MPa.

3. A flap fitting according to claims 1 and 2 **characterised in that** the laminated pressed material has a water absorption capability in accordance with ISO 62 of a maximum of 23 mg.

4. A flap fitting according to claims 1 to 3 **characterised in that** the laminated pressed material comprises 38% epoxy resin and 62% glass filament cloth.

5. A flap fitting according to one or more of claims 1 to 4 **characterised in that** the clamping ring (8) is subdivided into a plurality of segments.

## Revendications

1. Raccord à clapet, notamment destiné à être utilisé dans des milieux aqueux corrosifs comportant un disque de clapet (4), monté pivotant dans un boîtier (2) et dont le pourtour comporte un évidement (7) périphérique qui reçoit une bague d'étanchéité (6) et est délimité latéralement par une bague de serrage (8), qui est vissée au disque de clapet (4) et qui bloque la bague d'étanchéité (6) dans l'évidement (7) et est réalisée dans un matériau résistant aux milieux aqueux corrosifs, **caractérisé en ce que** la bague de serrage (8) est constituée d'un matériau stratifié en matière plastique renforcée par des fibres de verre, lequel matériau est réalisé en tissu de filaments de verre et en résine époxy.

2. Raccord à clapet selon la revendication 1, **caractérisé en ce que** le matériau stratifié possède une résistance à la traction de 300 MPa au moins, une résistance à la pression dans le sens perpendiculaire à la direction des couches de 350 MPa au moins, un effort de flexion jusqu'à rupture dans le sens perpendiculaire à la direction des couches de 340 MPa au moins.

3. Raccord à clapet selon les revendications 1 et 2, **caractérisé en ce que** le matériau stratifié a une propriété d'absorption d'eau selon ISO 62 de 23 mg maximum.

4. Raccord à clapet selon l'une quelconque des revendications 1 à 3, **caractérisé en ce que** le matériau stratifié est réalisé jusqu'à 38 % en résine époxy et jusqu'à 62 % en tissu de filaments de verre.

5. Raccord à clapet selon une ou plusieurs des revendications 1 à 4, **caractérisé en ce que** la bague de serrage (8) est divisée en plusieurs segments.
